# FASCICULE DE BREVET EUROPEEN

(11) **EP 2 841 287 B1**
(45) Date de publication et mention de la délivrance du brevet: **22.02.2017**
(21) Numéro de dépôt: 13715998.4
(22) Date de dépôt: 15.04.2013
(51) Int. Cl.: B60C 15/00, B60C 15/06, D07B 1/02, B60C 9/00

(54) **ARMATURE DE CARCASSE POUR PNEUMATIQUE D'AVION**
KARKASSENVERSTÄRKUNG FÜR EINEN FLUGZEUGREIFEN
CARCASS REINFORCEMENT FOR AN AIRCRAFT TYRE

(30) Priorité: 24.04.2012 FR 1253724
(43) Date de publication de la demande: 04.03.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CAFFEAU, Charlotte, F-63040 Clermont-Ferrand Cedex 9 (FR); BOURSIN, Arnaud, F-63040 Clermont-Ferrand Cedex 9 (FR)
(74) Mandataire: Millanvois, Patrick Jacques Jean
(86) Numéro de dépôt international: PCT/EP2013/057817
(87) Numéro de publication internationale: WO 2013/160136

(56) Documents cités:
- WO-A1-02/085646
- FR-A1- 2 953 763
- US-A- 2 971 553

## Description

La présente invention concerne un pneumatique pour avion, dont l'usage est caractérisé par des conditions de pression, de charge et de vitesse élevées.

Un pneumatique pour avion doit satisfaire plus particulièrement des exigences de résistance à l'usure et d'endurance. Par endurance, on entend l'aptitude du pneumatique à résister au cours du temps aux sollicitations cycliques auxquelles il est soumis. Lorsque la bande de roulement d'un pneumatique est usée, ce qui marque la fin d'une première vie d'utilisation, le pneumatique est rechapé, c'est-à-dire que la bande de roulement usée est remplacée par une nouvelle bande de roulement pour permettre une deuxième vie d'utilisation. Une résistance à l'usure améliorée permet d'effectuer un plus grand nombre d'atterrissages par vie d'utilisation. Une endurance améliorée permet d'augmenter le nombre de vies d'utilisation d'un même pneumatique.

De façon générale, un pneumatique comprend une bande de roulement, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique pour avion comprend généralement une pluralité de couches de carcasse s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille.

Chaque couche de carcasse de la première et de la deuxième famille est constituée d'éléments de renforcement parallèles entre eux, faisant, avec la direction circonférentielle, un angle compris entre 80° et 100°.

Les éléments de renforcement des couches de carcasse sont le plus souvent des câbles constitués de filés de filaments textiles, préférentiellement en polyamide aliphatique ou en polyamide aromatique, et caractérisés par leurs propriétés mécaniques en extension.

Les propriétés mécaniques en extension des éléments de renforcement textiles, telles que le module d'élasticité, l'allongement et la force à la rupture, sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

En utilisation, un pneumatique pour avion est soumis à une combinaison de charge et de pression induisant un taux de flexion élevé, typiquement supérieur à 30%. Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique pour avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Avec les matériaux textiles couramment utilisés pour les éléments de renforcement, tels que les polyamides aliphatiques ou les polyamides aromatiques, l'armature de carcasse peut, par exemple, comprendre au moins 5 couches de carcasse.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Il est connu par ailleurs de l'homme du métier que les couches de carcasse comprenant des éléments de renforcement en polyamides aromatiques ont une faible résistance à la compression et sont particulièrement sensibles à la rupture par fatigue en compression.

Pour améliorer la résistance à la fatigue des bourrelets d'un pneumatique destiné à porter de lourdes charges et gonflé à pression élevée, tel qu'un pneumatique pour avion, le document EP 0 567 521 décrit une armature de carcasse dans laquelle les extrémités des couches de carcasse axialement les plus extérieures sont positionnées entre les retournements respectifs des couches de carcasse les plus axialement intérieures et s'enroulant de l'intérieur vers l'extérieur du pneumatique autour d'une tringle.

L'armature de carcasse, telle que décrite dans le document EP 1 381 525, comprend au moins deux couches de carcasse d'une première famille, s'enroulant de l'intérieur vers l'extérieur du pneumatique autour d'une tringle, et au moins une couche de carcasse axialement extérieure aux couches de carcasse de la première famille et à leurs retournements respectifs. La solution proposée pour améliorer l'endurance des bourrelets d'un pneumatique pour avion réside dans le remplacement des couches de carcasse formées d'éléments de renforcement en polyamide aliphatique par des couches de carcasse formées d'éléments de renforcement hybrides, c'est-à-dire formés de filés de modules différents. Les éléments de renforcement des couches de carcasse sont des câbles formés par retordage d'au moins un filé ayant un module d'élasticité en extension au moins égal à 2000 cN/tex, avec un filé surtordu ou non, de module d'élasticité en extension au plus égal à 1500 cN/tex, lesdits modules d'élasticité en extension desdits filés étant mesurés pour une force de traction égale à 0,1 fois la force de rupture d'un filé.

Le document US 2,971,553 est considéré comme l'état de la technique le plus proche et divulgue toutes les caractéristiques du préambule de la revendication 1.

Les inventeurs se sont donnés pour objectif d'améliorer encore l'endurance de l'armature de carcasse d'un pneumatique pour avion, dans la zone de flexion du bourrelet sur la jante.

Cet objectif a été atteint, selon l'invention, par un pneumatique pour avion, comprenant :
- une bande de roulement reliée par deux flancs à deux bourrelets, destinés à assurer une liaison mécanique entre le pneumatique et une jante,
- une armature de sommet, radialement intérieure à la bande de roulement, et une armature de carcasse, radialement intérieure à l'armature de sommet,
- l'armature de carcasse comprenant une première et une deuxième famille de couches de carcasse s'étendant entre les deux bourrelets,
- la première famille comprenant au moins une couche de carcasse, s'enroulant, dans chaque bourrelet, de l'intérieur vers l'extérieur du pneumatique, autour d'un élément de renforcement circonférentiel appelé tringle, pour former un retournement ayant une extrémité libre radialement extérieure au point le plus radialement extérieur de la tringle,
- la deuxième famille comprenant au moins deux couches de carcasse, deux à deux adjacentes, s'étendant, dans chaque bourrelet, de l'extérieur vers l'intérieur du pneumatique, jusqu'à leurs extrémités respectives radialement intérieures à une droite axiale passant par le centre de la tringle et axialement intérieures à une droite radiale passant par le centre de la tringle à une distance axiale au moins égale à 5 mm,
les couches de carcasse de la deuxième famille étant axialement intérieures à au moins un retournement d'une couche de carcasse de la première famille.

Les couches de carcasse de la deuxième famille, deux à deux adjacentes, impliquent qu'aucun retournement d'une couche de carcasse de la première famille n'est intercalé entre deux couches adjacentes de la deuxième famille. Les couches de carcasse de la deuxième famille forment ainsi un ensemble de couches juxtaposées.

En outre les extrémités des couches de carcasse de la deuxième famille sont radialement intérieures à une droite axiale passant par le centre de la tringle. Par centre de la tringle, on entend le centre du cercle circonscrit à la section méridienne de la tringle de forme généralement polygonale ou sensiblement circulaire. La droite axiale passant par le centre de la tringle est la droite parallèle à l'axe de rotation du pneumatique et passant par le centre de la tringle. Les extrémités des couches de carcasse de la deuxième famille sont alors intercalées entre la tringle et une portion radiale du crochet de jante, appelée aile du crochet de jante, et sont, par conséquent, soumises aux efforts de pression de serrage exercés par la tringle sur l'aile du crochet de jante, ce qui contribue à l'ancrage desdites extrémités dans le bourrelet.

De plus les extrémités des couches de carcasse de la deuxième famille sont axialement intérieures à une droite radiale passant par le centre de la tringle. La droite radiale passant par le centre de la tringle est la droite parallèle au plan équatorial du pneumatique et passant par le centre de la tringle. Dans ce cas, les couches de carcasse de la deuxième famille sont engagées sous la tringle, sans toutefois former un retournement, car leurs extrémités respectives restent radialement intérieures à la droite axiale passant par le centre de la tringle. Les extrémités des couches de carcasse de la deuxième famille sont alors intercalées entre la tringle et une portion sensiblement axiale du crochet de jante, appelée siège du crochet de jante, et sont, par conséquent, soumises aux efforts de pression de serrage exercés par la tringle sur le siège du crochet de jante, qui est une zone de fortes pressions, ce qui contribue à améliorer encore l'ancrage desdites extrémités dans le bourrelet.

Enfin la distance axiale entre l'extrémité de chaque couche de carcasse de la deuxième famille et la droite radiale passant par le centre de la tringle est au moins égale à 5 mm. Cette distance minimale garantit que ladite extrémité est bien axialement intérieure à la droite radiale passant par le centre de la tringle, compte tenu des tolérances de fabrication du pneumatique.

Selon l'invention, les couches de carcasse de la deuxième famille sont axialement intérieures à au moins un retournement d'une couche de carcasse de la première famille, ce qui implique que les couches de carcasse de la deuxième famille, axialement les plus extérieures dans les flancs, sont positionnées axialement à l'intérieur d'au moins un retournement de carcasse de la première famille, dans la zone de flexion du bourrelet sur le rebord de la jante dite zone de flexion sur jante, et non à l'extérieur de tous les retournements comme dans l'état de la technique usuel.

Par conséquent les couches de carcasse de la deuxième famille sont rapprochées de la fibre neutre du bourrelet, qui se comporte mécaniquement comme une poutre en flexion sur le rebord de la jante. Par conséquent, le niveau de compression des éléments de renforcement des couches de carcasse de la deuxième famille est diminué. Cette baisse de compression est, en particulier, significative dans les éléments de renforcement la couche de carcasse la plus axialement extérieure dans la zone de flexion sur jante, la plus comprimée car la plus éloignée de la fibre neutre du bourrelet. Ceci réduit donc le risque de rupture par fatigue en compression de ladite couche de carcasse et, par conséquent, des autres couches de carcasse de la deuxième famille plus axialement intérieures à cette dernière.

En pratique, la position de la couche de carcasse de la deuxième famille, la plus axialement extérieure dans la zone de flexion sur jante, est ajustée, par rapport à la fibre neutre du bourrelet, pour obtenir une compression la plus faible possible, voire sensiblement nulle, dans les éléments de renforcement de ladite de carcasse. En conséquence, les éléments de renforcement dans les autres couches de carcasse de la deuxième famille, plus proches de la fibre neutre du bourrelet, sont alors sensiblement en extension.

Selon un mode de réalisation préféré de l'invention, les couches de carcasse de la deuxième famille sont axialement intérieures à tous les retournements des couches de carcasse de la première famille. Cette configuration permet de rapprocher au maximum les couches de carcasse de la deuxième famille de la fibre neutre du bourrelet, donc d'atteindre la compression minimale pour un nombre de couches de carcasse donné.

Préférentiellement, les éléments de renforcement d'une couche de carcasse sont constitués de matériaux textiles. Les matériaux textiles sont couramment utilisés pour les pneumatiques pour avion, en particulier pour minimiser la masse des couches de carcasse et donc celle du pneumatique, ce qui est un critère essentiel pour le transport aérien.

Les éléments de renforcement d'une couche de carcasse sont constitués d'un polyamide aliphatique, tel que le nylon, matériau usuel dans le domaine des pneumatiques pour avion.

Encore plus avantageusement, les éléments de renforcement d'une couche de carcasse sont constitués d'un polyamide aromatique, tel que l'aramide. L'utilisation de l'aramide permet de réduire le nombre de couches de carcasse par rapport au nylon, car la force à rupture de l'aramide est supérieure à celle du nylon. Le nombre de couches de carcasse étant moins élevé qu'en nylon, les niveaux de compression dans les couches de carcasse de la deuxième famille sont moins élevés car lesdites couches de carcasse sont moins éloignées de la fibre neutre du bourrelet.

Préférentiellement les éléments de renforcement d'une couche de carcasse sont des éléments de renforcement hybrides combinant au moins un polyamide aliphatique et au moins un polyamide aromatique. Des éléments de renforcement de type hybride sont par exemple décrits dans le brevet EP 1 381 525. Ils présentent un compromis entre les avantages du nylon et ceux du l'aramide, en présentant un comportement bimodule caractérisé par un faible module d'élasticité aux faibles allongements et un module d'élasticité élevé aux forts allongements.

Pour améliorer encore l'endurance du bourrelet, il est envisageable de renforcer l'endurance des couches de carcasse de la première et de la deuxième famille en utilisant des éléments de renforcement textiles intrinsèquement plus endurants en raison de leur structure.

Un procédé usuel de fabrication des éléments de renforcement textiles comprend une première étape de surtordage suivie d'une deuxième étape de retordage. L'étape de surtordage consiste à transformer un filé constitué de filaments textiles parallèles en surtors par torsion du filé selon un sens antihoraire, c'est-à-dire inverse du sens de déplacement des aiguilles d'une montre. Puis plusieurs surtors obtenus à l'étape précédente sont assemblés pour constituer un retors par torsion de l'assemblage de surtors selon un sens horaire, c'est-à-dire selon le sens de déplacement des aiguilles d'une montre.

Le niveau de torsion est exprimé en nombre de tours par mètre. Le niveau de torsion a un impact sur la force à rupture, le module en extension et l'endurance en compression de l'élément de renforcement. Lorsque la torsion augmente, la force à rupture et le module en extension diminuent, alors que l'endurance en compression est améliorée.

Les inventeurs ont montré qu'une surtorsion, pour l'obtention des surtors des éléments de renforcement textiles des couches de carcasse, au moins égale à 250 tours/mètre et au plus égale à 290 tours/mètre permet d'atteindre un niveau d'endurance des couches de carcasse satisfaisant.

Selon une première variante de réalisation, les surtorsions, pour l'obtention des surtors des éléments de renforcement textiles respectivement des couches de carcasse de la première et de la deuxième famille, sont identiques ; ce qui permet de standardiser le type d'éléments de renforcement textiles entre les couches de carcasse de la première et de la deuxième famille.

Selon une deuxième variante de réalisation, il est avantageux d'avoir la surtorsion, pour l'obtention des surtors des éléments de renforcement textiles des couches de carcasse de la deuxième famille, au moins égale à 1.15 fois la surtorsion, pour l'obtention des surtors des éléments de renforcement textiles des couches de carcasse de la première famille. A titre d'exemple, la surtorsion, pour l'obtention des surtors des éléments de renforcement textiles des couches de carcasse de la deuxième famille, est égale à 290 tours/mètre, alors que la surtorsion, pour l'obtention des surtors des éléments de renforcement textiles des couches de carcasse de la première famille, est égale 250 tours/mètre. En d'autres termes la surtorsion est différenciée entre la première et la deuxième famille de couches de carcasses, en fonction des sollicitations mécaniques auxquelles elles sont respectivement soumises, particulièrement en compression.

Avantageusement le pneumatique comprend une couche de renforcement additionnelle, appelée languette intérieure, s'enroulant autour de la tringle et séparant la tringle des couches de carcasse. Ceci implique en particulier que la couche de carcasse de la deuxième famille, axialement la plus intérieure, n'est pas en contact direct avec la tringle.

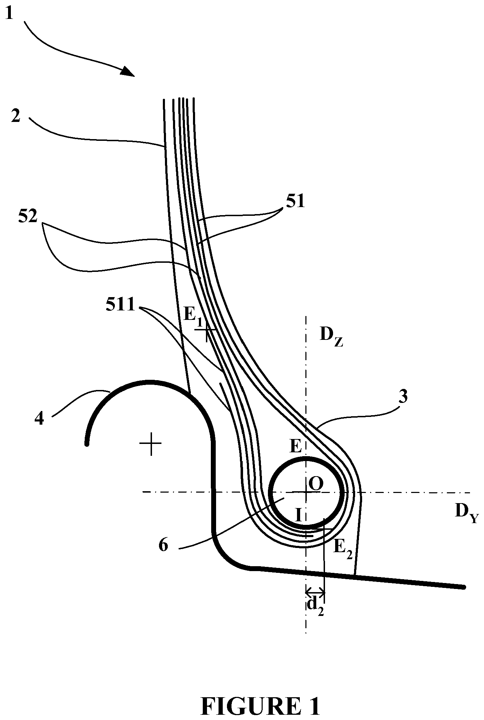

Les caractéristiques et autres avantages de l'invention seront mieux compris à l'aide de la figure 1 qui présente une coupe méridienne d'un bourrelet de pneumatique selon l'invention.

La figure 1 n'est pas représentée à l'échelle. Tous les éléments ne sont pas nécessairement représentés. En particulier, toutes les extrémités de couches de carcasse ne sont pas nécessairement référencées.

La figure 1 présente une coupe méridienne d'un pneumatique 1 selon l'invention, monté sur une jante de montage 4, dans la zone de flanc 2 et de bourrelet 3.

L'armature de carcasse comprend une pluralité de couches de carcasse réparties entre une première famille de couches de carcasse (51) et une deuxième famille de couches de carcasse (52).

La première famille est constituée par deux couches de carcasse (51), s'enroulant, dans chaque bourrelet (3), de l'intérieur vers l'extérieur du pneumatique, autour d'une tringle (6), pour former un retournement (511) dont l'extrémité (E₁) est radialement extérieure au point (E) le plus radialement extérieur de la tringle (6). Le retournement (511) est la portion de couche de carcasse (51) comprise entre le point le plus radialement intérieur de la couche de carcasse, à l'aplomb du point (I) le plus radialement intérieur de la tringle (6), et l'extrémité (E₁) du retournement (511). Les couches de carcasse (51) de la première famille sont les couches de carcasse les plus proches de la cavité intérieure du pneumatique et donc les plus axialement intérieures, dans le flanc (2).

La deuxième famille est constituée par deux couches de carcasse (52) s'étendant, dans chaque bourrelet (3), de l'extérieur vers l'intérieur du pneumatique, jusqu'à une extrémité (E₂) radialement intérieure au point (E) le plus radialement extérieur de la tringle (6). Les couches de carcasse (52) de la deuxième famille sont les couches de carcasse les plus proches de la surface extérieure du pneumatique et donc les plus axialement extérieures, dans le flanc (2).

Les deux couches de carcasse (52) de la deuxième famille sont adjacentes entre elles et axialement intérieures à tous les retournements (511) des couches de carcasse (51) de la première famille. Par ailleurs les extrémités (E₂) des couches de carcasse (52) de la deuxième famille sont radialement intérieures à la droite axiale (D_{Y}) passant par le centre (O) de la tringle (6) et axialement intérieures à la droite radiale (D_{Z}) passant par le centre (O) de la tringle (6).

L'invention a été plus particulièrement étudiée pour un pneumatique d'avion à armature de carcasse radiale de dimension 46x17.0R20, utilisé sur un avion de ligne, et dont la pression nominale est 15.9 bars, la charge nominale 20642 daN et la vitesse maximale 378 km/h.

Dans l'exemple étudié, l'armature de carcasse comprend deux couches de carcasse de la première famille, deux couches de carcasse de la deuxième famille et une couche de renforcement additionnelle au contact de la tringle. Dans le pneumatique de référence, représentant l'état de la technique, les retournements des couches de la première famille sont axialement intérieurs aux couches de carcasse de la deuxième famille. Dans le pneumatique selon l'invention, les retournements des couches de la première famille sont axialement extérieurs aux couches de carcasse de la deuxième famille. Les éléments de renforcement des couches de carcasse de la première et de la deuxième famille sont identiques et en polyamide aliphatique ou nylon.

Dans les configurations précédentes, des simulations numériques de calculs par éléments finis ont montré que la compression maximale dans la couche de carcasse de la deuxième famille la plus axialement extérieure est égale 1.6%, pour le pneumatique de référence, et devient sensiblement nulle pour un pneumatique selon l'invention, d'où le gain en endurance du bourrelet escompté.

## Revendications

1. Pneumatique (1) pour avion comprenant :
- une bande de roulement reliée par deux flancs (2) à deux bourrelets (3), destinés à assurer une liaison mécanique entre le pneumatique (1) et une jante (4),
- une armature de sommet, radialement intérieure à la bande de roulement, et une armature de carcasse (5), radialement intérieure à l'armature de sommet,
- l'armature de carcasse (5) comprenant une première et une deuxième famille de couches de carcasse (51, 52) s'étendant entre les deux bourrelets (3),
- la première famille comprenant au moins une couche de carcasse (51), s'enroulant, dans chaque bourrelet (3), de l'intérieur vers l'extérieur du pneumatique, autour d'un élément de renforcement circonférentiel appelé tringle (6), pour former un retournement (511) ayant une extrémité libre (E₁) radialement extérieure au point (E) le plus radialement extérieur de la tringle (6),
- la deuxième famille comprenant au moins deux couches de carcasse (52), deux à deux adjacentes, s'étendant, dans chaque bourrelet (3), de l'extérieur vers l'intérieur du pneumatique, jusqu'à leurs extrémités respectives (E₂) radialement intérieures à une droite axiale (D_{Y}) passant par le centre (O) de la tringle (6) et axialement intérieures à une droite radiale (D_{Z}) passant par le centre (O) de la tringle (6) à une distance axiale (d₂) au moins égale à 5 mm,
- les couches de carcasse (52) de la deuxième famille étant axialement intérieures à au moins un retournement (511) d'une couche de carcasse (51) de la première famille,
- les éléments de renforcement d'une couche de carcasse (51, 52) étant constitués de matériaux textiles,
- tout élément de renforcement textile de toute couche de carcasse (51, 52) étant obtenu par la torsion, selon le sens horaire, d'au moins deux surtors, chaque surtors étant obtenu par la torsion, selon le sens anti-horaire, d'un filé constitué de filaments textiles parallèles entre eux, cette torsion étant définie par un nombre de tours par mètre appelé surtorsion,
**caractérisé en ce que** la surtorsion, pour l'obtention des surtors des éléments de renforcement textiles des couches de carcasse (51, 52), est au moins égale à 250 tours/mètre et au plus égale à 290 tours/mètre.

2. Pneumatique (1) pour avion selon la revendication 1, **caractérisé en ce que** les couches de carcasse (52) de la deuxième famille sont axialement intérieures à tous les retournements des couches de carcasse (51) de la première famille.

3. Pneumatique (1) pour avion selon l'une des revendications 1 ou 2, **caractérisé en ce que** les éléments de renforcement d'une couche de carcasse (51, 52) sont constitués d'un polyamide aliphatique.

4. Pneumatique (1) pour avion selon l'une des revendications 1 ou 2, **caractérisé en ce que** les éléments de renforcement d'une couche de carcasse (51, 52) sont constitués d'un polyamide aromatique.

5. Pneumatique (1) pour avion selon l'une des revendications 1 ou 2, **caractérisé en ce que** les éléments de renforcement d'une couche de carcasse (51, 52) sont des éléments de renforcement hybrides combinant au moins un polyamide aliphatique et au moins un polyamide aromatique.

6. Pneumatique (1) pour avion selon l'une quelconque des revendications 1 à 5, **caractérisé en ce que** la surtorsion, pour l'obtention des surtors des éléments de renforcement textiles des couches de carcasse (52) de la deuxième famille, est au moins égale à 1.15 fois la surtorsion, pour l'obtention des surtors des éléments de renforcement textiles des couches de carcasse (51) de la première famille.

7. Pneumatique (1) pour avion selon l'une quelconque des revendications 1 à 6, **caractérisé en ce qu**'il comprend une couche de renforcement additionnelle s'enroulant autour de la tringle (6) et séparant la tringle (6) des couches de carcasse (51,52).

## Patentansprüche

1. Reifen (1) für ein Flugzeug, aufweisend:
- eine Reifenlauffläche, welche durch zwei Flanken (2) mit zwei Wülsten (3) verbunden ist, welche dafür vorgesehen sind, eine mechanische Verbindung zwischen dem Reifen (1) und der Felge (4) zu gewährleisten,
- eine Scheitelbewehrung, welche sich radial inwendig von der Reifenlauffläche befindet, und eine Karkassenbewehrung (5), welche sich radial inwendig von der Scheitelbewehrung befindet,
- wobei die Karkassenbewehrung (5) eine erste und eine zweite Gruppe von Karkassenschichten (51, 52) aufweist, welche sich zwischen den beiden Wülsten (3) erstrecken,
- wobei die erste Gruppe mindestens eine Karkassenschicht (51) aufweist, welche sich in jeder Wulst (3) vom Innenbereich in Richtung des Außenbereichs des Reifens um ein umlaufendes Verstärkungselement, Stange (6) genannt, wickelt, um einen Rückläufer (511) mit einem freien Ende (E₁) zu bilden, welches radial außenseitig von dem Punkt (E) liegt, welcher am weitesten radial außen von der Stange (6) liegt,
- wobei die zweite Gruppe mindestens zwei, paarweise benachbarte Karkassenschichten (52) aufweist, welche sich in jeder Wulst (3) vom Außenbereich in Richtung des Innenbereichs des Reifens bis zu ihren jeweiligen Enden (E₂) erstrecken, welche radial inwendig von einer axialen, durch das Zentrum (O) der Stange (6) verlaufenden Geraden (D_{y}) und axial inwendig von einer radialen, durch das Zentrum (O) der Stange (6) verlaufenden Geraden (D_{z}) in einem axialen Abstand (d₂) von mindestens gleich 5 mm liegen,
- wobei die Karkassenschichten (52) der zweiten Gruppe axial inwendig von mindestens einem Rückläufer (511) einer Karkassenschicht (51) der ersten Gruppe liegen,
- wobei die Verstärkungselemente einer Karkassenschicht (51, 52) aus Textilmaterialien gebildet sind,
- wobei das ganze textile Verstärkungselement der ganzen Karkassenschicht (51, 52) durch die Verdrehung im Uhrzeigersinn von mindestens zwei Überdrehungen erzielt wird, wobei jede Überdrehung durch die Verdrehung gegen den Uhrzeigersinn eines aus zueinander parallelen textilen Filamenten bestehenden Garns erzielt werden, wobei die Verdrehung durch eine Anzahl von Umdrehungen pro Meter definiert wird, was Überdrehung genannt wird,
**dadurch gekennzeichnet, dass** die Überdrehung für die Erzielung der Überdrehungen der textilen Verstärkungselemente der Karkassenschichten (51, 52) mindestens gleich 250 Umdrehungen/Meter und höchstens gleich 290 Umdrehungen/Meter beträgt.

2. Reifen (1) für ein Flugzeug nach Anspruch 1, **dadurch gekennzeichnet, dass** die Karkassenschichten (52) der zweiten Gruppe axial inwendig von allen Rückläufern der Karkassenschichten (51) der ersten Gruppe liegen.

3. Reifen (1) für ein Flugzeug nach einem der Ansprüche 1 oder 2, **dadurch gekennzeichnet, dass** die Verstärkungselemente einer Karkassenschicht (51, 52) von einem aliphatischen Polyamid gebildet sind.

4. Reifen (1) für ein Flugzeug nach einem der Ansprüche 1 oder 2, **dadurch gekennzeichnet, dass** die Verstärkungselemente einer Karkassenschicht (51, 52) von einem aromatischen Polyamid gebildet sind.

5. Reifen (1) für ein Flugzeug nach einem der Ansprüche 1 oder 2, **dadurch gekennzeichnet, dass** die Verstärkungselemente einer Karkassenschicht (51, 52) hybride Verstärkungselemente sind, welche mindestens ein aliphatisches Polyamid mit mindestens einem aromatischen Polyamid kombinieren.

6. Reifen (1) für ein Flugzeug nach einem der Ansprüche 1 bis 5, **dadurch gekennzeichnet, dass** die Überdrehung für das Erzielen der Überdrehungen der textilen Verstärkungselemente der Karkassenschichten (52) der zweiten Gruppe mindestens gleich dem 1,15 fachen der Überdrehung für das Erzielen der Überdrehungen der textilen Verstärkungselemente der Karkassenschichten (51) der ersten Gruppe ist.

7. Reifen (1) für ein Flugzeug nach einem der Ansprüche 1 bis 6, **dadurch gekennzeichnet, dass** er eine zusätzliche Verstärkungsschicht aufweist, welche sich um die Stange (6) wickelt und die Stange (6) von den Karkassenschichten (51, 52) trennt.

## Claims

1. Aeroplane tyre (1) comprising:
- a tread connected by two side walls (2) to two beads (3), which are intended to provide a mechanical connection between the tyre (1) and a rim (4),
- a crown reinforcement, radially on the inside of the tread, and a carcass reinforcement (5) radially on the inside of the crown reinforcement,
- the carcass reinforcement (5) comprising a first and a second family of carcass layers (51, 52) extending between the two beads (3),
- the first family comprising at least one carcass layer (51) wrapped, within each bead (3), from the inside towards the outside of the tyre, around a circumferential reinforcing element known as a bead wire (6) to form a turn-up (511) having a free end (E₁) radially on the outside of the radially outermost point (E) of the bead wire (6),
- the second family comprising at least two carcass layers (52), adjacent each to the next, extending, within each bead (3), from the outside towards the inside of the tyre, as far as their respective ends (E₂) which are radially on the inside of an axial straight line (D_{Y}) passing through the centre (O) of the bead wire (6) and axially on the inside of a radial straight line (D_{Z}) passing through the centre (O) of the bead wire (6) at an axial distance (d₂) at least equal to 5 mm,
- the carcass layers (52) of the second family being axially on the inside of at least one turn-up (511) of a carcass layer (51) of the first family,
- the reinforcing elements of a carcass layer (51, 52) being made of textile materials, any textile reinforcing element of any carcass layer (51, 52) being obtained by twisting, in the clockwise direction, at least two overtwists, each overtwist being obtained by twisting, in the anticlockwise direction, a spun fibre consisting of mutually parallel textile filaments, this twisting being defined by a number of twists per metre referred to as overtwisting,
**characterized in that** the overtwisting, to obtain overtwists of the textile reinforcing elements of the carcass layers (51, 52), is at least equal to 250 turns/metre and at most 290 turns/metre.

2. Aeroplane tyre (1) according to Claim 1, **characterized in that** the carcass layers (52) of the second family are axially on the inside of all the turn-ups of the carcass layers (51) of the first family.

3. Aeroplane tyre (1) according to either of Claims 1 and 2, **characterized in that** the reinforcing elements of a carcass layer (51, 52) are made of an aliphatic polyamide.

4. Aeroplane tyre (1) according to either of Claims 1 and 2, **characterized in that** the reinforcing elements of a carcass layer (51, 52) are made of an aromatic polyamide.

5. Aeroplane tyre (1) according to either of Claims 1 and 2, **characterized in that** the reinforcing elements of a carcass layer (51, 52) are hybrid reinforcing elements combining at least an aliphatic polyamide and at least an aromatic polyamide.

6. Aeroplane tyre (1) according to any one of Claims 1 to 5, **characterized in that** the overtwisting, to obtain overtwists of the textile reinforcing elements of the carcass layers (52), of the second family is at least equal to 1.15 times the overtwisting, to obtain the overtwists of the textile reinforcing elements of the carcass layers (51) of the first family.

7. Aeroplane tyre (1) according to any one of Claims 1 to 6, **characterized in that** it comprises an additional reinforcing layer wrapped around the bead wire (6) and separating the bead wire (6) from the carcass layers (51, 52).
